# EUROPEAN PATENT APPLICATION

(11) **EP 4 598 206 A1**
(43) Date of publication of application: **06.08.2025**
(21) Application number: 22960886.4
(22) Date of filing: 28.09.2022
(51) Int. Cl.: H04W 72/20

(54) **TERMINAL**

(71) Applicant: NTT DOCOMO, INC., Tokyo 100-6150 (JP)
(72) Inventor: YOSHIOKA Shohei, Tokyo, 100-6150 (JP); NAGATA Satoshi, Tokyo 100-6150 (JP); YOU Luhua, Beijing 100190 (CN); SUN Weiqi, Beijing 100190 (CN); WANG Jing, Beijing 100190 (CN); CHEN Lan, Beijing 100190 (CN)
(74) Representative: Hoffmann Eitle
(86) International application number: PCT/JP2022/036311
(87) International publication number: WO 2024/069824

(57) **Abstract**

A terminal includes: a transmission unit that transmits an uplink signal using a physical uplink control channel; and a control unit that performs repetitive transmission of the physical uplink control channel over a plurality of slots using a common resource of the physical uplink control channel if an individual resource of the physical uplink control channel is not configured.

## Description

### TECHNICAL FIELD

The present disclosure relates to a terminal that supports repetitive transmission of a physical uplink control channel.

### BACKGROUND

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.

In 3GPP, a non-terrestrial network (NTN) has been discussed. The NTN is a network including flying objects such as satellites, and terminals (User Equipment, UE) can communicate with base stations via flying objects. The NTN is a network that can provide services to areas (such as the sea) that cannot be covered by a terrestrial network (TN) for reasons such as cost, by using radio relay devices in the sky.

Non-Patent Literature 1 provides for repetitive transmission of a physical uplink control channel (PUCCH) from the UE to the NTN or the like. Specifically, Non-Patent Literature 1 provides for the repetitive transmission of PUCCH in a case in which a dedicated PUCCH resource provided by PUCCH-ResourceSet of PUCCH-Config is configured in the UE. In addition, Non-Patent Literature 1 provides that a PUCCH resource is provided to the UE by pucch-ResourceCommon if the dedicated PUCCH resource is not configured in the UE.

### CITATION LIST

### NON-PATENT LITERATURE

Non-Patent Literature 1: 3GPP TS 38.213 V17.3.0, 3rd Generation Partnership Project; Technical Specification Group Radio Access Network; NR; Physical layer procedures for control (Release 17), 3GPP, September 2022

### SUMMARY OF THE INVENTION

However, according to the related art, since repetitive transmission of PUCCH cannot be performed in a case in which a dedicated PUCCH resource is not configured in the UE, it is difficult to enhance a coverage area.

Therefore, the following disclosure has been made in view of such a situation, and an object of the present disclosure is to provide a terminal capable of enhancing a coverage area even if a dedicated PUCCH resource is not configured in UE.

An aspect of the present disclosure is a terminal (UE 200) including: a transmission unit (radio signal transmission and reception unit 210) that transmits an uplink signal (HARQ-ACK) using a physical uplink control channel (PUCCH); and a control unit (control signal and reference signal processing unit 240) that performs repetitive transmission of the physical uplink control channel over a plurality of slots using a common resource of the physical uplink control channel if an individual resource of the physical uplink control channel is not configured (PUCCH resource configuration).

### BRIEF DESCRIPTION OF DRAWINGS

[FIG. 1] FIG. 1 is an overall schematic configuration diagram of a radio communication system 10.
[FIG. 2] FIG. 2 is a diagram illustrating frequency ranges used in the radio communication system 10.
[FIG. 3] FIG. 3 is a diagram illustrating a configuration example of a radio frame, a sub-frame, and a slot used in the radio communication system 10.
[FIG. 4] FIG. 4 is a functional block diagram of UE 200.
[FIG. 5] FIG. 5 is a functional block diagram of gNB 100.
[FIG. 6] FIG. 6 is a diagram for explaining operation example 1 of the radio communication system 10.
[FIG. 7] FIG. 7 is a diagram for explaining the operation example 1 of the radio communication system 10.
[FIG. 8] FIG. 8 is a diagram for explaining the operation example 1 of the radio communication system 10.
[FIG. 9] FIG. 9 is a diagram for explaining operation example 3 of the radio communication system 10.
[FIG. 10] FIG. 10 is a diagram illustrating an example of a hardware configuration of the gNB 100 and the UE 200.
[FIG. 11] FIG. 11 is a diagram illustrating a configuration example of a vehicle 2001.

### DETAILED DESCRIPTION OF THE INVENTION

An embodiment will be described below with reference to the drawings. Note that the same or similar reference numerals have been attached to the same functions and configurations, and a description thereof will be omitted as appropriate.

### (1) Overall schematic configuration of radio communication system

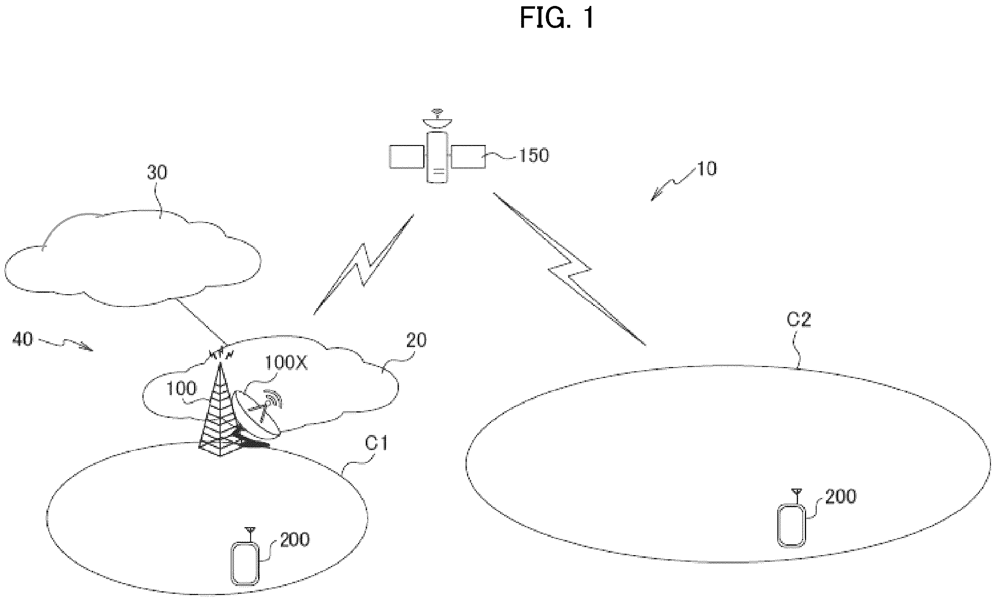

FIG. 1 is an overall schematic diagram of a radio communication system 10 according to the embodiment. The radio communication system 10 is a radio communication system according to 5G New Radio (NR), and includes a Next Generation-Radio Access Network 20 (hereinafter, referred to as NG-RAN 20) and a terminal 200 (hereinafter, referred to as User Equipment (UE) 200). The radio communication system 10 may be a radio communication system according to a scheme called Beyond 5G, 5G Evolution, or 6G. The radio communication system 10 may include a gNB 100, the UE 200, the NG-RAN 20, and a core network 30.

The NG-RAN 20 includes a radio base station 100 (hereinafter, gNB 100). The NG-RAN 20 actually includes a plurality of NG-RAN nodes, specifically gNBs (or ng-eNBs), and is connected to the core network 30 according to 5G (for example, 5GC). The NG-RAN 20 and the core network 30 may be simply referred to as a "network". The specific configuration of the radio communication system 10 including the gNB 100 and the UE 200 is not limited to the example illustrated in FIG. 1.

The gNB 100 is a radio base station according to 5G, and performs radio communication with the UE 200 according to 5G. The gNB 100 and the UE 200 can support Massive MIMO (Multiple-Input Multiple-Output) that generates a beam BM with higher directivity by controlling radio signals transmitted from a plurality of antenna elements, carrier aggregation (CA) that uses a plurality of component carriers (CCs) bundled together, dual connectivity (DC) that simultaneously performs communication to two or more transport blocks between the UE and each of the two NG-RAN nodes, and the like.

The core network 30 includes a network device. The network device may include an LMF (Location Management Function), an AMF (Access and Mobility management Function), and the like. The network device may be an E-SMLC (Evolved Serving Mobile Location Centre). The gNB 100 includes a radio communication node 40.

In the present embodiment, the radio communication system 10 may include a non-terrestrial network (NTN). In the NTN, an artificial satellite 150 (hereinafter, referred to as satellite 150) or the like is used to provide services to areas that cannot be covered by the terrestrial network (TN) for reasons such as cost. The NTN may include flying objects other than the satellite 150, specifically, a high altitude platform station (HAPS). The HAPS may include airships, balloons, drones, and the like.

The network including the gNB 100 and the UE 200, but not including the satellite 150 or the like, may be called a terrestrial network (TN) in contrast to the NTN. The TN may be interpreted as a first network provided on the ground or on the land surface. The TN may be interpreted as a first network provided near the ground or the land surface.

The NTN may be interpreted as a second network in which at least some of devices constituting the NTN are located at an altitude higher than the TN. The NTN may be interpreted as a second network located above the TN. The NTN may be interpreted as a second network located at a high altitude based on the land surface. The cells formed by the NTN may be interpreted as moving cells. The moving cells may be interpreted as quasi-earth-fixed cells (see 3GPP TSG-RAN WG2 Meeting #112-e, R2-2010765). The moving cells may be interpreted as earth-moving cells (see 3GPP TSG-RAN WG2 Meeting #108, R2-1916240). The moving cells may be interpreted as the cells formed by the NTN located at a high altitude.

The NTN can provide more reliable services. For example, the NTN is expected to be applied to IoT (inter of things), ships, buses, trains, and critical communications. Further, the NTN has scalability according to efficient multicasting or broadcasting.

The network including the gNB 100 and the UE 200, but not including the satellite 150 or the like, may be called a terrestrial network (TN) in contrast to the NTN.

The gNB 100 has an NTN gateway 100X. The NTN gateway 100X transmits downlink signals to the satellite 150. The NTN gateway 100X receives uplink signals from the satellite 150. The gNB 100 has a cell C1 as a coverage area. The gNB 100 may have a node (not illustrated) adjacent to the cell C1 as a coverage area.

The satellite 150 relays the downlink signals received from the NTN gateway 100X to the UE (not illustrated). The satellite 150 relays the uplink signals received from the UE (not illustrated) to the NTN gateway 100X. The satellite 150 may be considered to be a transmission-reception point (TRP).

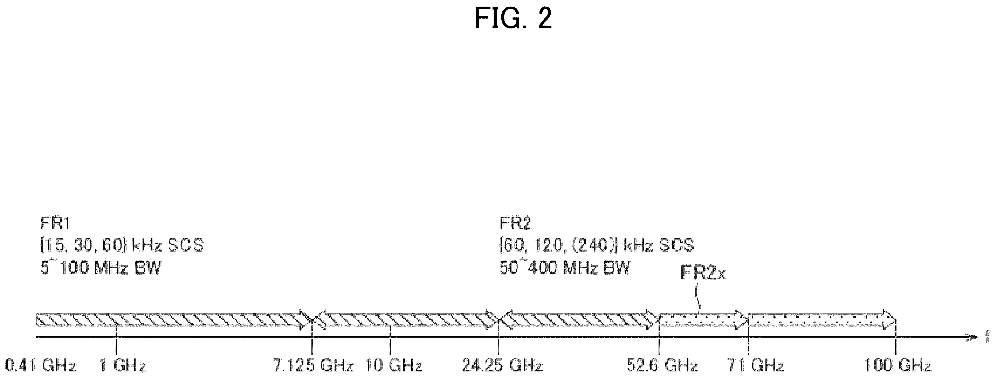

The radio communication system 10 supports a plurality of frequency ranges (FR). FIG. 2 illustrates frequency ranges used in the radio communication system 10.

As illustrated in FIG. 2, the radio communication system 10 supports the plurality of frequency ranges (FR). Specifically, the radio communication system 10 may support the following frequency ranges:
- FR1: 410 MHz to 7.125 GHz
- FR2: 24.25 GHz to 52.6 GHz

In FR1, sub-carrier spacing (SCS) of 15, 30 or 60 kHz may be used, and a bandwidth (BW) of 5 to 100 MHz may be used. FR2 has a higher frequency than FR1, and SCS of 60 or 120 kHz (may include 240 kHz) may be used, and a bandwidth (BW) of 50 to 400 MHz may be used.

The SCS may be interpreted as numerology. The numerology is defined in 3GPP TS38.300, and corresponds to one sub-carrier spacing in the frequency domain.

Further, the radio communication system 10 also supports a higher frequency band than that of FR2. Specifically, the radio communication system 10 supports a frequency band exceeding 52.6 GHz and up to 71 GHz or 114.25 GHz. Such a higher frequency band may be referred to as "FR2x" for the sake of convenience.

In order to solve the problem that the effect of phase noise becomes large in a high frequency band, when a band exceeding 52.6 GHz is used, Cyclic Prefix-Orthogonal Frequency Division Multiplexing (CP-OFDM)/Discrete Fourier Transform-Spread (DFT-S-OFDM) having larger sub-carrier spacing (SCS) may be applied. In addition, when a band exceeding 52.6 GHz is used, Cyclic Prefix-Orthogonal Frequency Division Multiplexing (CP-OFDM)/Discrete Fourier Transform-Spread (DFT-S-OFDM) having larger sub-carrier spacing (SCS) may be applied.

In a high frequency band such as FR2x, the increase of phase noise between carriers becomes a problem as described above. Therefore, it may be necessary to apply larger (wider) SCS or a single carrier waveform. The symbol/CP (Cyclic Prefix) period and slot period become shorter as the SCS becomes lager (when the 14 symbol/slot configuration is maintained).

When the 14 symbol/slot configuration is maintained, the symbol period (and slot period) becomes shorter as the SCS becomes larger (wider). The symbol period may be called a symbol length, a time direction, a time domain, or the like. The frequency direction may be called a frequency domain, a resource block, a subcarrier, a BWP (Bandwidth part), or the like.

The frequency resource may include a component carrier, a subcarrier, a resource block (RB), a resource block group (RBG), a BWP (Bandwidth part), and the like. The time resource may include a symbol, a slot, a minislot, a subframe, a radio frame, a DRX (Discontinuous Reception) period, and the like.

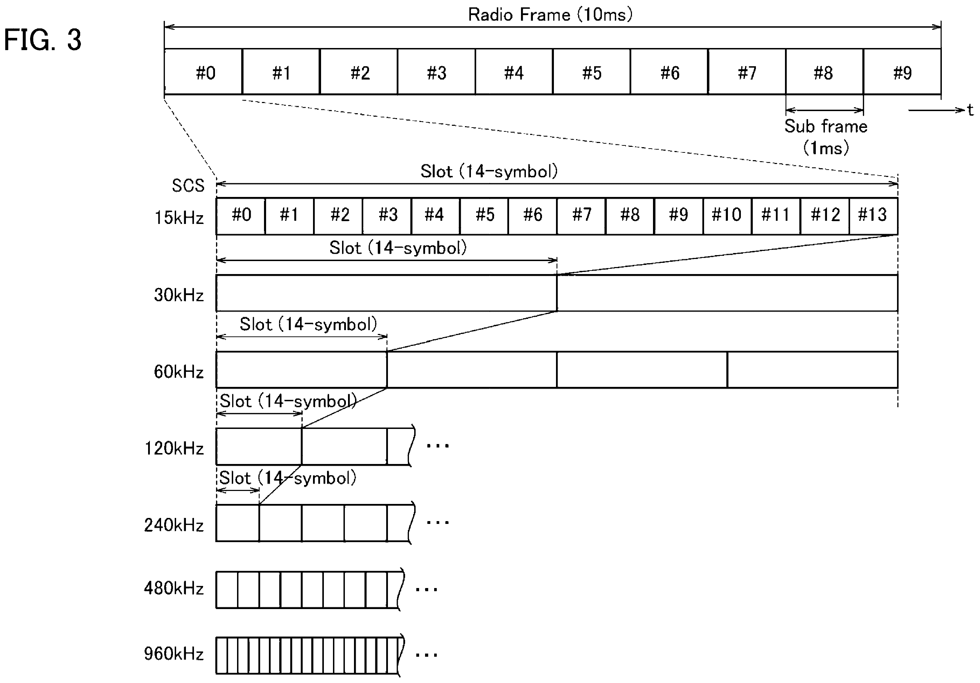

FIG. 3 illustrates a configuration example of a radio frame, a sub-frame, and a slot used in the radio communication system 10.

As illustrated in FIG. 3, one slot is constituted of 14 symbols, and the symbol period (and slot period) becomes shorter as the SCS becomes larger (wider). The SCS is not limited to the spacing (frequency) illustrated in FIG. 3. For example, 480 kHz, 960 kHz, or the like may be used.

Note that the number of symbols constituting one slot may not necessarily be 14 symbols (for example, 28 or 56 symbols). Further, the number of slots for each subframe may vary depending on the SCS.

Note that the time direction (t) illustrated in FIG. 3 may be referred to as a time domain, a symbol period, symbol time, or the like. The frequency direction may be referred to as a frequency domain, a resource block, a sub-carrier, a bandwidth part (BWP), or the like.

A DMRS is a type of reference signal and is prepared for various channels. Here, unless otherwise specified, it may mean a DMRS for a downlink data channel, specifically, for a PDSCH (Physical Downlink Shared Channel). However, a DMRS for an uplink data channel, specifically, for a PUSCH (Physical Uplink Shared Channel), may be interpreted in the same way as a DMRS for a PDSCH.

The DMRS may be used in a device, for example, in the UE 200 for channel estimation as part of coherent demodulation. The DMRS may be present only in a resource block (RB) used for PDSCH transmission.

The DMRS may have multiple mapping types. Specifically, the DMRS has mapping type A and mapping type B. In mapping type A, a first DMRS is arranged on the second or third symbol of the slot. In mapping type A, the DMRS may be mapped based on the slot boundaries, regardless of where the actual data transmission starts in the slot. The reason why the first DMRS is arranged on the second or third symbol of the slot may be interpreted because the first DMRS is arranged after control resource sets (CORESET).

In mapping type B, a first DMRS may be arranged on the first symbol of the data allocation. That is, the position of the DMRS may be provided relative to where the data is arranged, rather than relative to the slot boundaries.

In addition, the DMRS may have multiple types. Specifically, the DMRS has Type 1 and Type 2. Type 1 and Type 2 differ in mapping in the frequency domain and in the maximum number of orthogonal reference signals. In Type 1, up to 4 orthogonal signals can be output with a single-symbol DMRS, and in Type **2,** up to 8 orthogonal signals can be output with a double-symbol DMRS.

### (2) Functional block configuration of radio communication system 10

Next, a functional block configuration of the radio communication system 10 will be described.

### (2.1) UE 200

First, a functional block configuration of the UE 200 will be described.

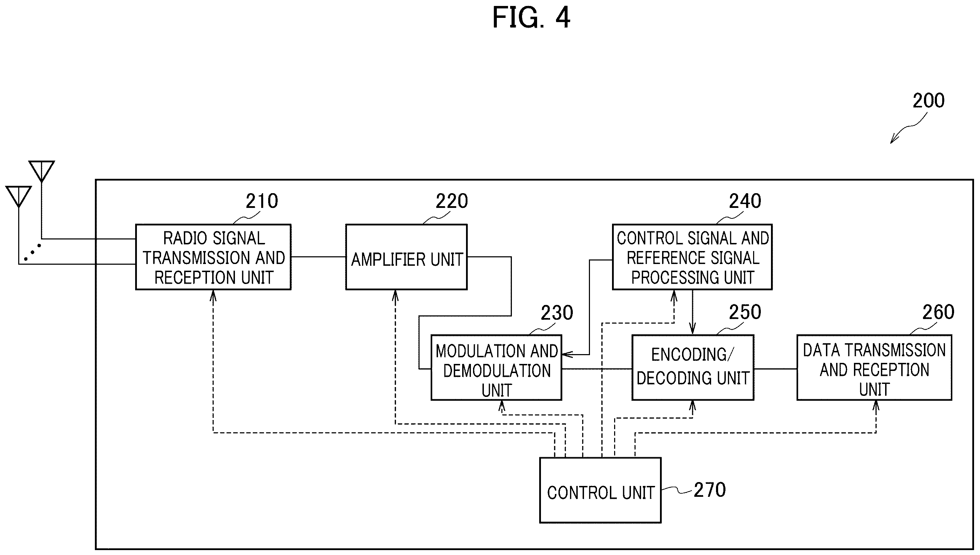

FIG. 4 is a functional block diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

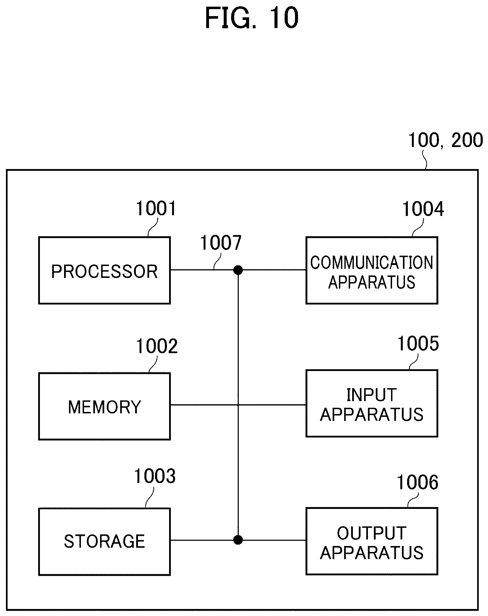

Note that only the main functional blocks relating to the description of the embodiment are illustrated in FIG. 4, and the UE 200 includes other functional blocks (for example, power supply unit). In addition, FIG. 4 illustrates a functional block configuration of the UE 200, and please refer to FIG. 10 for a hardware configuration.

The radio signal transmission and reception unit 210 transmits and receives radio signals according to NR. The radio signal transmission and reception unit 210 supports Massive MIMO that generates a beam BM with high directivity by controlling radio (RF) signals transmitted from a plurality of antenna elements, carrier aggregation (CA) that uses a plurality of component carriers (CCs) bundled together, dual connectivity (DC) that simultaneously performs communication between the UE 200 and each of two NG-RAN nodes, and the like.

In the present embodiment, the radio signal transmission and reception unit 210 may include a transmission unit that transmits an uplink signal using a physical uplink control channel. The physical uplink control channel may be interpreted as a PUCCH. The uplink signal may be interpreted as an HARQ-ACK (Hybrid Automatic Repeat Request-Acknowledge). Specifically, the uplink signal may include Msg. 4 (contention resolution) in the RACH procedure at the time of initial access.

In the present embodiment, the radio signal transmission and reception unit 210 may include a transmission unit that transmits terminal capability information including configuration information of repetitive transmission. Specifically, the configuration information of the repetitive transmission may include whether to support the repetitive transmission of Msg. 4 PUCCH. The configuration information of the repetitive transmission may include the number of repetitive transmissions of Msg. 4 PUCCH. The configuration information of repetitive transmission may include information relating to the repetitive transmission of Msg. 4 PUCCH based on slot/sub-slot. The configuration information of the repetitive transmission may include information relating to the repetition of Msg. 4 PUCCH of intra-slot frequency hopping (FH)/inter-slot frequency hopping (FH). The UE 200 may be interpreted as terminal capability information or UE capability.

The amplifier unit 220 includes a PA (Power Amplifier)/LNA (Low Noise Amplifier) and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation and demodulation, a transmission power configuration, a resource block allocation, and the like for each predetermined communication destination (gNB 100 or another gNB). Cyclic Prefix-Orthogonal Frequency Division Multiplexing (CP-OFDM)/Discrete Fourier Transform-Spread (DFT-S-OFDM) may be applied in the modulation and demodulation unit 230. In addition, the DFT-S-OFDM may be used not only for an uplink (UL), but also for a downlink (DL).

The control signal and reference signal processing unit 240 performs processing regarding various control signals transmitted and received by the UE 200, and processing regarding various reference signals transmitted and received by the UE 200.

Specifically, the control signal and reference signal processing unit 240 receives various control signals transmitted from the gNB 100 via a predetermined control channel, for example, the control signals for the radio resource control layer (RRC). The control signal and reference signal processing unit 240 also transmits various control signals to the gNB 100 via a predetermined control channel.

The control signal and reference signal processing unit 240 performs processing using a reference signal (RS), such as a demodulation reference signal (DMRS) and a phase tracking reference signal (PTRS). The DMRS is a UE 200-specific reference signal (pilot signal) for estimating a fading channel used for data demodulation, known between a base station and the UE 200. The PTRS is a UE 200-specific reference signal for the purpose of estimating phase noise which becomes a problem in a high frequency band.

The reference signals may include, in addition to the DMRS and the PTRS, a channel state information-reference signal (CSI-RS), a sounding reference signal (SRS), and a positioning reference signal (PRS) for positional information.

The channels include control channels and data channels. The control channels may include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI)), a Physical Broadcast Channel (PBCH), and the like.

In addition, the data channels may include a PDSCH (Physical Downlink Shared Channel), a PUSCH (Physical Uplink Shared Channel), and the like. Data refers to data transmitted via the data channel. The data channels may be read as shared channels.

The control signal and reference signal processing unit 240 may receive downlink control information (DCI). The DCI includes, as existing fields, fields for storing DCI Formats, a Carrier indicator (CI), a BWP indicator, an FDRA (Frequency Domain Resource Assignment), a TDRA (Time Domain Resource Assignment), an MCS (Modulation and Coding Scheme), an HPN (HARQ Process Number), an NDI (New Data Indicator), an RV (Redundancy Version), and the like.

The value stored in the DCI Format field is an information element to specify a format of the DCI. The value stored in the CI field is an information element to specify a CC to which the DCI is applied. The value stored in the BWP indicator field is an information element to specify a BWP to which the DCI is applied. The BWP that can be specified by a BWP indicator is configured by an information element (BandwidthPart-Config) included in an RRC message. The value stored in the FDRA field is an information element to specify a frequency domain resource to which the DCI is applied. The frequency domain resource is specified by a value stored in the FDRA field and an information element (RA Type) included in the RRC message. The value stored in the TDRA field is an information element to specify a time domain resource to which the DCI is applied. The time domain resource is specified by a value stored in the TDRA field and an information element (pdsch-TimeDomainAllocationList, pusch-TimeDomainAllocationList) included in the RRC message. The time domain resource may be specified by a value stored in the TDRA field, and by a default table. The value stored in the MCS field is an information element to specify an MCS to which the DCI is applied. The MCS is specified by a value stored in the MCS, and by an MCS table. The MCS table may be specified by an RRC message, or specified by RNTI scrambling. The value stored in the HPN field is an information element to specify a HARQ process to which the DCI is applied. The value stored in the NDI is an information element to specify whether the data to which the DCI is applied is the initial transmission data. The value stored in the RV field is an information element to specify the redundancy of data to which the DCI is applied.

In the present embodiment, the control signal and reference signal processing unit 240 may include a control unit that performs repetitive transmission of a physical uplink control channel over a plurality of slots using a common resource of the physical uplink control channel if an individual resource of the physical uplink control channel is not configured.

"If an individual resource of the physical uplink control channel is not configured" may be interpreted that a dedicated PUCCH resource is not configured in the UE.

An individual resource of the physical uplink control channel may be interpreted as one or more PUCCH resources included in the PUCCH resource set. Specific examples of the PUCCH resource set and the PUCCH resource will be described later. The configuration of the individual resource of the physical uplink control channel may be interpreted as PUCCH resource configuration. The repetitive transmission of the physical uplink control channel may be interpreted as PUCCH repetition. The common resource of the physical uplink control channel may be interpreted as pucch-ResourceCommon.

In the present embodiment, the control signal and reference signal processing unit 240 may include the control unit that performs the repetitive transmission of PUCCH based on a configuration of a common resource of the physical uplink control channel including the number of repetitive transmissions of PUCCH. Specifically, the number of repetitive transmissions of PUCCH may be interpreted as a repetition factor. The repetition factor may be interpreted as a repetitive transmission element of PUCCH. The element may include the number of repetitive transmissions of PUCCH. The repetition factor may be interpreted as a repetition coefficient and/or the number of repetitions. In the following description, the repetition factor will be described as the number of repetitions unless otherwise specifically mentioned. The configuration of the common resource of the physical uplink control channel may be interpreted as a table including the repetition factor corresponding to each of the PUCCH resource sets. A specific example of the table will be described later.

In the present embodiment, the control signal and reference signal processing unit 240 may include the control unit that performs the repetitive transmission of PUCCH based on a specific condition relating to performing the repetitive transmission of PUCCH. Specifically, the specific condition may be interpreted as a case in which an element relating to a table illustrated in operation example 1, which will be described later, is configured. The element may be interpreted as the number of repetitive transmissions of PUCCH. The specific condition may be interpreted as a case in which a column relating to the repetition factor is configured. The specific condition may be interpreted as a case in which one row in the table having the column relating to the repetition factor is configured. The specific condition may be interpreted as a case in which an indication of Msg. 4 by DCI is given from the NW. The specific condition may be interpreted as a case in which the UE 200 receives an indication of repetitive transmission from the gNB 100 in response to a request regarding the number of repetitive transmissions of PUCCH.

In the present embodiment, the control signal and reference signal processing unit 240 may include the control unit that performs the repetitive transmission of PUCCH by a second slot, based on a configuration of a common resource of the physical uplink control channel including information that enables the repetitive transmission of PUCCH by the second slot having a shorter time domain than a first slot. Specifically, the first slot may be interpreted as a slot constituted of the specific number of symbols (for example, 14 symbols). The second slot may be interpreted as a slot constituted of a plurality of symbols less than the specific number of symbols (for example, 14 symbols). The second slot may be interpreted as a sub-slot.

In the present embodiment, the control signal and reference signal processing unit 240 may include the control unit that performs the repetitive transmission, based on a configuration of a common resource of the physical uplink control channel including information relating to repetitive transmission of PUCCH to which frequency hopping (FH) between a plurality of slots or in a slot is applied. The information relating to the repetitive transmission of PUCCH to which the FH is applied will be described later. The frequency hopping may be interpreted as a system that performs communication by switching a band to be used for communication at a high speed for each extremely short time from among frequency bands in a specific range.

The encoding/decoding unit 250 performs data division/concatenation, channel coding/decoding, and the like for each predetermined communication destination (gNB 100 or another gNB). Specifically, the encoding/decoding unit 250 divides the data output from the data transmission and reception unit 260 into predetermined sizes, and performs channel coding on the divided data. The encoding/decoding unit 250 also decodes the data output from the modulation and demodulation unit 230, and concatenates the decoded data.

The data transmission and reception unit 260 transmits and receives a protocol data unit (PDU) and a service data unit (SDU). Specifically, the data transmission and reception unit 260 performs assembly/disassembly of PDU/SDU in a plurality of layers (a media access control layer (MAC), a radio link control layer (RLC), a packet data convergence protocol layer (PDCP) and the like). In addition, the data transmission and reception unit 260 performs error correction and retransmission control of data based on HARQ (Hybrid Automatic Repeat Request).

In the present embodiment, the data transmission and reception unit 260 may include a reception unit that receives security information to be used in the addition/change procedure.

The control unit 270 controls each of functional blocks constituting the UE 200.

In the radio communication system 10, an SSB (SS/PBCH Block) constituted of a synchronization signal (SS) and a downlink physical broadcast channel (PBCH) may be used.

The SSB is mainly transmitted from the network periodically in order for the UE 200 to perform detection of cell ID and reception timing at the start of communication. In NR, the SSB is reused to measure the reception quality of each cell. 5, 10, 20, 40, 80, 160 milliseconds or the like may be defined as the transmission period (periodicity) of the SSB. The UE 200 for initial access may be assumed to have a transmission period of 20 milliseconds.

### (2.2) gNB 100

Second, a functional block configuration of the gNB 100 will be described.

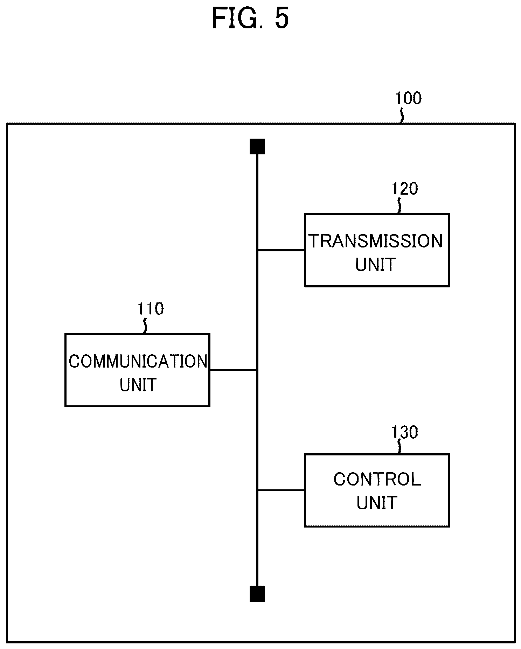

FIG. 5 is a functional block diagram of the gNB 100. As illustrated in FIG. 5, the gNB 100 includes a reception unit 110, a transmission unit 120, and a control unit 130.

The reception unit 110 receives various signals from the UE 200. The reception unit 110 may receive UL signals via PUCCH or PUSCH. For example, when a request regarding the number of repetitive transmissions of PUCCH is transmitted from the UE 200, the reception unit 110 receives a signal regarding the request.

The transmission unit 120 transmits various signals to the UE 200. For example, when the gNB 100 receives a request regarding the number of repetitive transmissions of PUCCH from the UE 200, the transmission unit 120 transmits an indication of repetitive transmission given from the gNB 100 to the UE 200. The transmission unit 120 may transmit DL signals via the PDCCH or PDSCH. The control unit 130 controls the gNB 100.

### (3) Operation of radio communication system

Next, operation of the radio communication system 10 will be described. Specifically, an operation example of the radio communication system 10 will be described that can enhance a coverage area even if a dedicated PUCCH resource is not configured in UE.

### (3.1) Assumption and problem

A problem in enhancing a coverage area even if a dedicated PUCCH resource is not configured in the UE will be described.

In 3GPP, the enhancement of PUCCH of Msg. 4 HARQ-ACK has been discussed to satisfy the coverage requirement. Non-Patent Literature 1 provides for repetitive transmission of PUCCH from the UE to the NTN or the like. Specifically, Non-Patent Literature 1 provides for repetitive transmission of PUCCH in a case in which a dedicated PUCCH resource provided by PUCCH-ResourceSet of PUCCH-Config is configured in the UE (see 3GPP TS 38.213, Section 9.2.6, Table 9.2.1-1).

Non-Patent Literature 1 also provides that that a PUCCH resource is provided to the UE by pucch-ResourceCommon if the dedicated PUCCH resource is not configured in the UE (see 3GPP TS 38.213, Section 9.2.1).

The pucch-ResourceCommon may be interpreted as an upper-layer parameter of SystemInformationBlockType1. The pucch-ResourceCommon can be specified as a numerical value of 0 to 15 indicating an index in the table illustrated in 3GPP TS-38.213 Table 9.2.1-1. For example, if pucch-ResourceCommon = 1, the following PUCCH configuration (resource) is used:
PUCCH format = format 0
First symbol index = 12
Number of symbols = 2
PRB offset = 0
Set of Initial CS (cyclic shift) index = {0,4, 8}

In addition, Non-Patent Literature 1 discloses that the UE applies intra-slot frequency hopping when a dedicated PUCCH resource is not configured and pucch-ResourceCommon is applied (see Section 9.2.1). However, the RedCap (Reduced Capability) UE can be configured not to apply intra-slot frequency hopping.

Further, 3GPP TS 38.331 discloses that IE BWP-UplinkCommon is used to configure cell-specific common parameters of uplink BWP.

However, according to the related art, since repetitive transmission of PUCCH cannot be performed in a case in which a dedicated PUCCH resource that is allocated to the UE 200 individually is not configured, it is difficult to enhance a coverage area.

As a solution to such a problem, a plurality of operation examples described below can be considered. It should be noted that each of the plurality of operation examples described below may be used alone or used in combination with two or more.

### (3.2) Operation examples

Operation examples that can solve the above problem will be described below. In each of the following operation examples, a handheld type UE and a VSAT (very small aperture terminal) type UE may be assumed. In particular, in the present operation example, a handheld type UE may be assumed. In a case in which a dedicated PUCCH resource is not configured in the UE, each of the following operation examples may be applied to the case in which a PUCCH for Msg. 4 HARQ-ACK is repeatedly transmitted, in the RACH procedure when the UE performs an initial access from an idle mode. The PUCCH transmission for Msg. 4 HARQ-ACK, and the PUCCH transmission performed by pucch-ResourceCommon in a case in which a dedicated PUCCH resource is not configured (that is, when there is no dedicated PUCCH resource configuration) can be replaced with each other.

### (3.2.1) Operation example 1

In operation example 1, a description will be given of a communication operation that performs repetitive transmission based on the definition and/or configuration of a common resource of a physical uplink control channel including the number of repetitive transmissions of PUCCH.

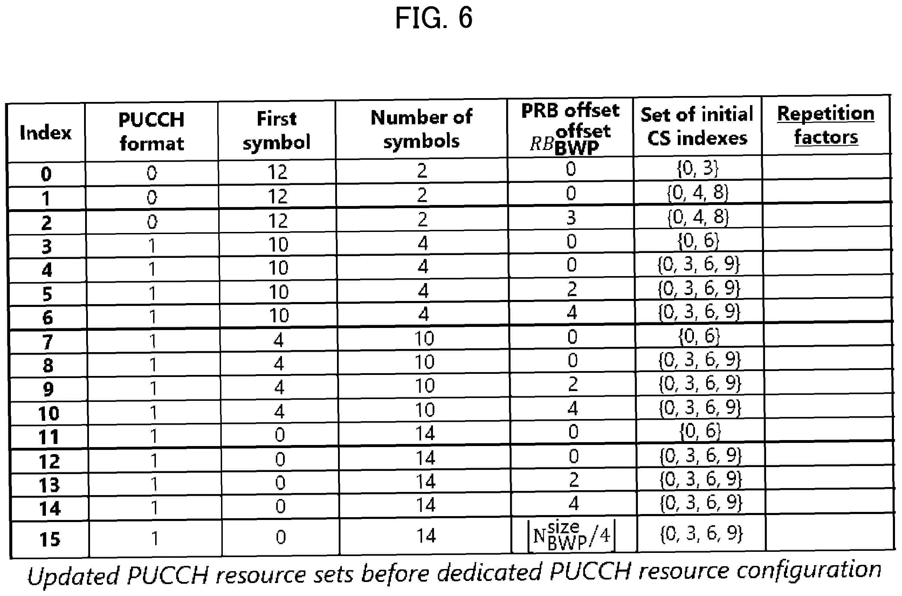

FIG. 6 is a diagram for explaining the operation example 1 of the radio communication system 10.

Alt1: The table illustrated in FIG. 6 may be interpreted as a table to which IE (pucch-ResourceCommon) of the current specification is applied, and to which an element relating to repetitive transmission of PUCCH is added. Specifically, the table includes a plurality of PUCCH resource sets and the number of repetitive transmissions of PUCCH.

Alt1-1: The table may be interpreted as an update of the table to which pucch-ResourceCommon is applied by newly adding a column that configures or defines an element relating to the repetitive transmission of PUCCH to the table to which pucch-ResourceCommon is applied.

The PUCCH resource sets include a value indicating a PUCCH format for PUCCH transmission, a first symbol, the number of symbols, a PRB offset (RB_{BWP}^{offset}), and a set of initial CS indexes. The table includes the PUCCH resource sets corresponding to Indexes from 0 to 15. The table may include a repetition factor (s) corresponding to each of the PUCCH resource sets.

When a new RRC parameter (for example enableMsg4repetition-r18) is configured, the UE 200 may perform repetitive transmission of PUCCH by applying the table illustrated in FIG. 6. Further, when the RRC parameter is not configured, the UE 200 may transmit PUCCH by applying a table to which IE (pucch-ResourceCommon) of the current specification is applied.

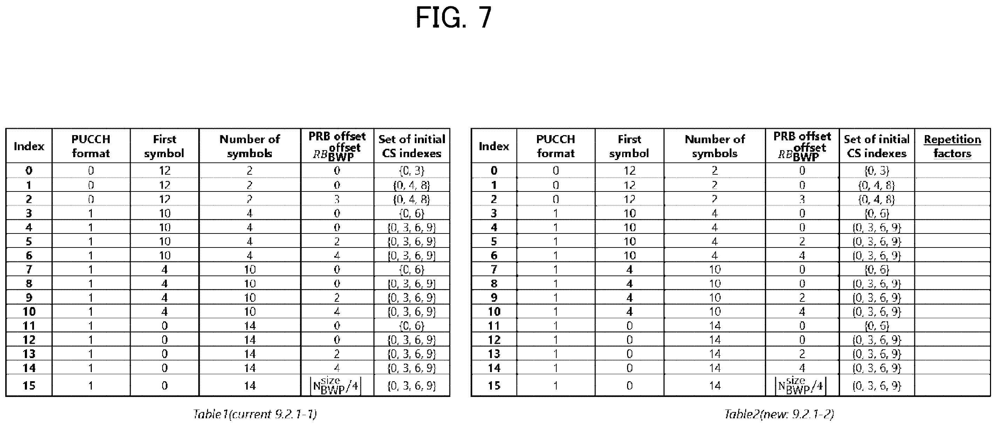

Alt1-2: FIG. 7 is a diagram for explaining the operation example 1 of the radio communication system 10. A table (Table 1) to which IE (pucch-ResourceCommon) of the current specification is applied is illustrated on the left side of FIG. 7, and a table (Table 2) similar to the table illustrated in FIG. 6 is illustrated on the right side of FIG. 7. The UE 200 may make a selection based on these tables and a specific condition.

For example, if communication with NTN is configured in the RRC parameter, the UE 200 may select Table 2 and perform repetitive transmission of PUCCH based on the number of repetitions. Specifically, if the repetitive transmission of PUCCH Msg. 4 is required as in the NTN LEO-1200 scenario (low earth orbit satellite flying at an altitude of 1200 km), and/or if TA/freq pre-compensation is made, and/or if SIB relating to NTN is received, the UE 200 may select Table 2.

Further, if communication with TN is configured in the RRC parameter, the UE 200 may select Table 1 and perform transmission of PUCCH.

As for an indication relating to the selection of Table 1 or Table 2, downlink control information (DCI), system information block (SIB), or the like may be used instead of RRC parameter. In addition, the selection of the table may be determined by the implementation of the UE 200.

If the UE 200 does not have a dedicated PUCCH resource configuration provided by PUCCH-ResourceSet in PUCCH-Config, the PUCCH resource set may be provided by pucch-ResourceCommon so as to transmit HARQ-ACK information on PUCCH in the initial ULBWP of PRB.

The number of repetitions corresponding to each PUCCH resource set may be configured or defined as follows. Note that "configuration" may be replaced with "definition ".

One value may be configured or defined as the number of repetitions for each PUCCH resource set. Specifically, one different value may be configured for each row of Table 2 (described as PUCCH resource set) illustrated in FIG. 7. In addition, one different value may be configured for each PUCCH format. For example, the number of repetitions corresponding to PUCCH format 0 may be configured to a value different from the number of repetitions corresponding to PUCCH format 1.

Opt1-1: The number of repetitions may be the same value (for example, any one of 1, 2, 4, or 8) as the number of PUCCH repetitions in the PUCCH-Config of Rel-16/17.

Opt1-2: The number of repetitions may be a value (for example, any one of 1, 2, 4, 8, 12, or 16) larger than the number of PUCCH repetitions in the PUCCH-Config of Rel-16/17. That is, the number of repetitions may be configured as a large value corresponding to communication with the NTN.

The number of repetitions may be combined with other operation examples. By configuring the number of repetitions in this way, the configuration of an indication signal such as an RRC parameter, DCI, or SIB can be simplified. In addition, the overhead of the signal can be reduced.

Two or more values may be configured or defined as the number of repetitions for each PUCCH resource set.

Opt2-1: Specifically, one repetition number or multiple repetition numbers may be configured or defined for each PUCCH resource in each row of Table 2 illustrated in FIG. 7 (PUCCH resource set). For example, the number of repetitions corresponding to the PUCCH format with index 0 and the number of repetitions corresponding to the symbol with index 0 may be configured respectively. By configuring the number of repetitions for each PUCCH resource in the PUCCH resource set, the number of repetitions can be configured as one-to-one mapping or one-to-multiple mapping.

In a case in which the number of repetitions is configured for each PUCCH resource, the UE 200 can transmit the PUCCH repeatedly based on the corresponding number of repetitions when the PUCCH resource is indicated.

Opt2-2: Multiple repetition numbers may be configured or defined in each row of Table 2 illustrated in FIG. 7 (PUCCH resource set). Of the candidate values (the repetition numbers, for example, 1, 2, 4, or 8) for the PUCCH resource sets and each PUCCH resource in the resource sets, the number of repetitions (for example, 2) actually used by the UE 200 may be indicated by the NW, or determined by the UE 200. For example, it may be indicated by the NW in a new field via the DCI. Thus, the UE 200 can flexibly change the number of repetitions.

When two or more repetition numbers may be configured or defined for each PUCCH resource set, the repetition numbers may be the same as the repetition numbers of PUCCH in the PUCCH-Config of Rel-16/17 (for example, any plural of 1, 2, 4, or 8). Further, the repetition numbers may be larger than the repetition numbers of PUCCH in the PUCCH-Config of Rel-16/17 (for example, any plural of 1, 2, 4, 8, 12, or 16). That is, the number of repetitions may be a larger value corresponding to communication with the NTN.

Thus, by configuring the multiple repetition numbers for each PUCCH resource set, the UE 200 can perform dynamically PUCCH repetitive transmission for each PUCCH resource, thereby changing the number of repetitions more flexibly.

### (Alt2)

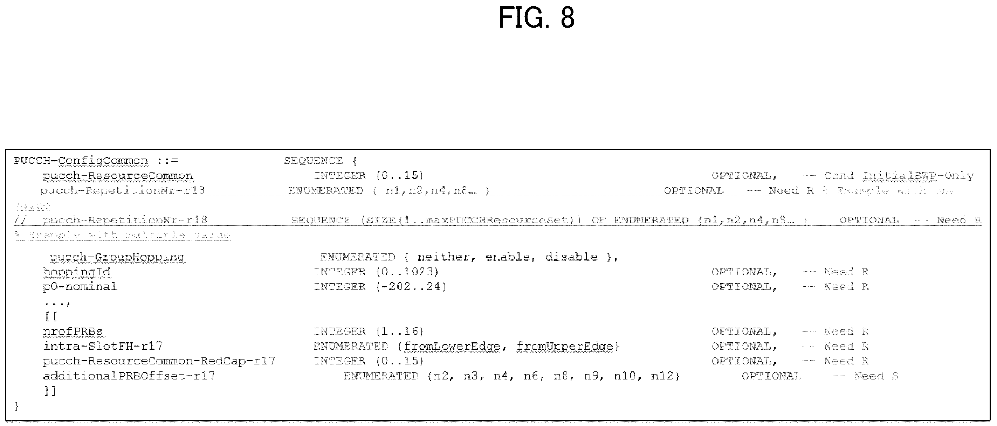

FIG. 8 is a diagram illustrating an configuration example of an RRC parameter. By updating the design of IE (PUCCH-ConfigCommon), a new IE (pucch-RepetitionNr-r18) may be configured as follows, for example. In the new IE, one or more repetition numbers may be configured or defined for all resource sets, each resource set, each PUCCH resource, and/or each PUCCH format. In such a configuration, one or more new RRC parameters may be configured, as illustrated in FIG. 8.

Specifically, "pucch-Repetition Nr-r18" may be configured as a new RRC parameter, as illustrated in FIG. 8. More specifically, an individual parameter may be configured for all resource sets from 0 to 15 included in the table illustrated in FIG. 6. The individual parameter may also be configured for each resource set. The individual parameter may also be configured for each PUCCH resource. The individual parameter may also be configured for each PUCCH format.

One repetition number may be configured for all PUCCH resource sets, or the number of repetitions may be configured for each PUCCH resource set.

When multiple repetition numbers are configured for the PUCCH resource set, an indication of the multiple repetition numbers and the repetition element is the same as in opt1-1 and opt1-2 described above.

When the multiple repetition numbers are configured for the PUCCH resource, an indication of the number of repetitions is the same as in opt2-1 and opt2-2.

### (3.2.2) Operation example 2

In operation example 2, a description will be given of a communication operation that performs repetitive transmission based on a specific condition relating to performing repetitive transmission.

If a dedicated PUCCH resource is not configured in the UE 200, the UE 200 may perform repetitive transmission of PUCCH for Msg. 4 HARQ-ACK based on a specific condition.

Alt0: When a table including a repetitive transmission element illustrated in the operation example 1 is used as a specific condition (for example, if a configuration relating to the table is made), the UE 200 may perform repetitive transmission of PUCCH. The specific condition may be interpreted as a case in which an element relating to the table is configured. The element may be interpreted as the number of repetitive transmissions of PUCCH. The specific condition may be interpreted as a case in which a column relating to the repetition factor is configured. The specific condition may be interpreted as a case in which one row in the table having the column relating to the repetition factor is configured.

Alt1: The UE 200 may perform the repetitive transmission of PUCCH or may not perform the repetitive transmission of PUCCH depending on whether an indication of Msg. 4 by DCI is given from the NW as a specific condition. Specifically, the UE 200 having received an indication of Msg. 4 by DCI given from the NW may perform the repetitive transmission of PUCCH. The UE 200 not having received an indication of Msg. 4 by DCI given from the NW does not perform the repetitive transmission of PUCCH.

The UE 200 may perform the repetitive transmission of PUCCH when receiving an indication by DCI at the same time as the configuration illustrated in the operation example 1 (for example, PUCCH resource in which the number of repetitions is configured).

The UE 200 may perform the repetitive transmission of PUCCH when receiving an indication by DCI, not at the same time as the configuration illustrated in the operation example 1.

Alt2: When UE 200 transmits a request regarding repetitive transmission (for example, number of times) and the gNB 100 transmits an indication of repetitive transmission in response to the request, the UE 200 may perform repetitive transmission of PUCCH based on the reception of the indication as a specific condition. The request regarding the number of repetitions may be interpreted as an indication that requests an indication of the repetitive transmission, and may be interpreted as an indication that requests the number of repetitions.

Specifically, the UE 200 transmits a request regarding repetitive transmission at the discretion of the UE 200 via Msg. 3. In addition, the UE 200 may transmit a request regarding the repetitive transmission via Msg. 3 based on a predetermined rule. After transmitting the request, the UE 200 performs the repetitive transmission of PUCCH for HARQ-ACK of Msg. 4 when receiving an indication of Msg. 4 (such as DCI) from the gNB 100. When the UE 200 is a handheld device that can be used in the NTN scenario, the UE 200 may always transmit a request regarding the repetitive transmission.

Variation 1 of Alt2: The UE 200 may report some assistance information such as CSI, UE type, and service type via Msg. 3. Thus, the NW can easily determine an indication of repetitive transmission, the number of repetitive transmissions, or the like suitable for the UE type, or the like.

Variation 2 of Alt2: The UE 200 may request an indication of repetitive transmission, the number of repetitive transmissions, or the like from among the multiple repetition numbers described in the proposal of the operation example 1, or may request the number of repetitions from among the predetermined candidate values of the repetition numbers. The number of repetitions actually indicated may be the same as or different from the requested number of repetitions.

Alt3: The UE 200 may perform the repetitive transmission of PUCCH based on the determination of the UE 200 without confirmation to the NW. Specifically, when the multiple repetition numbers described in the operation example 1 are provided to the UE 200, the UE 200 may determine to configure the repetition of PUCCH of Msg. 4 HARQ-ACK and/or the number of repetitions by the implementation of the UE 200, based on the specific condition in which the multiple repetition numbers are provided. That is, the UE 200 may directly apply the determined number of repetitions without confirmation to the gNB 100. Similarly, the UE 200 may determine whether to perform the repetitive transmission.

Variation of Alt3: The UE 200 may determine the number of repetitions from a set of predetermined candidate values. In addition, the UE 200 may report to the gNB 100 whether to perform the number of repetitions and/or the repetitive transmission determined, for example, via Msg. 3.

### (3.2.3) Operation example 3

The UE 200 may apply a conventional PUCCH repetitive transmission procedure (see Section 9.2.6 of 3GPP TS 38.213) in PUCCH repetitive transmission for Msg. 4 HARQ-ACK performed by slot/sub-slot based repetition.

### (Operation example 3-1: time domain)

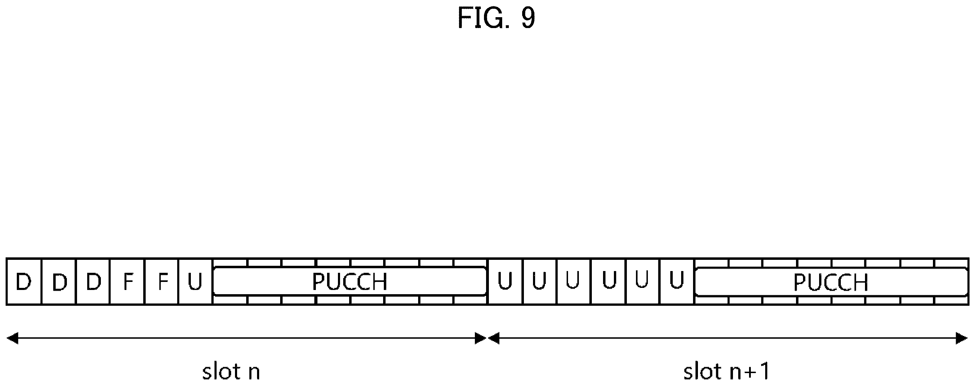

In operation example 3-1, a communication operation of repetitive transmission by a second slot will be described with reference to FIG. 9, based on a configuration of a common resource of the physical uplink control channel including information that enables the repetitive transmission by the second slot having a shorter time domain than a first slot.

In the conventional PUCCH repetitive transmission procedure, if sub-slotLengthForPUCCH is specified in PUCCH-Config for the UE 200, sub-slot-based PUCCH repetitive transmission is enabled. If sub-slotLengthForPUCCH is not specified in PUCCH-Config, the UE 200 may perform the repetitive transmission of PUCCH over a plurality of slots. The slot may be interpreted as a slot constituted of 14 symbols as illustrated in FIG. 9. The sub-slot may be interpreted as a slot constituted of less than 14 symbols.

Opt1: A new IE "sub-slotLengthForPUCCH-r18" may be configured in PUCCH-ConfigCommon. In this case, sub-slot-based PUCCH repetitive transmission for Msg. 4 HARQ-ACK is enabled. If a new IE "sub-slotLengthForPUCCH-r18" is not configured in PUCCH-ConfigCommon, the UE 200 performs the repetitive transmission of PUCCH including Msg. 4 HARQ-ACK over a plurality of slots. The length of the sub-slot can be configured in PUCCH-ConfigCommon, and a value of Rel-16 (for example, 2/7 for normal CP, 2/6 for extended CP) can be reused.

Opt2: A new IE indicating that repetitive transmission of PUCCH is performed by a unit of slot or a unit of sub-slot may be configured. Further, if the sub-slot-based repetitive transmission is indicated from the gNB 100, the gNB 100 may indicate the sub-slot length of sub-slot-based PUCCH by the number of symbols. The UE 200 performs the repetitive transmission of PUCCH for Msg. 4 HARQ-ACK based on the indication following a slot or a sub-slot.

In the repetitive transmission of PUCCH for Msg. 4 HARQ-ACK, the repetition in each slot may be the same number of consecutive symbols.

Variation: Only slot-based repetitive transmission with respect to Msg. 4 PUCCH may be supported in the UE 200 that is in IDLE state.

### (Example 3-2: frequency domain)

In operation example 3-2, a communication operation for performing the repetitive transmission will be described, based on a configuration of a common resource of the physical uplink control channel including information relating to repetitive transmission to which frequency hopping between a plurality of slots or in a slot is applied.

A inter-slot FH may be configured/indicated in the PUCCH of HARQ-ACK Msg. 4. Specifically, the UE 200 may operate by replacing the number of repetitions described in the operation example 1 with the related element of inter-slot FH, and may operate the number of repetitions described in the operation example 1 together with the operation example 3-2.

Opt1: A new IE "interslotFrequencyHopping-r18" may be configured in PUCCH-ConfigCommon. In this case, if the new IE is not configured, the UE 200 may perform the intra-slot FH for repeating the PUCCH transmission in different slots. The intra-slot frequency hopping and the inter-slot frequency hopping cannot be simultaneously enabled in the UE 200. Further, if the new IE is not configured, the UE 200 may operate according to IE of the current specification.

Opt2: A new IE indicating whether the inter-slot FH or the intra-slot FH is enabled may be configured. In this case, an indication of whether the inter-slot FH or the intra-slot FH is enabled may be a binary indication, for example.

If a new IE indicating whether the inter-slot FH or the intra-slot FH is enabled is configured, the UE 200 may operate according to an FH indication for repetition of Msg. 4 HARQ-ACK PUCCH. If the new IE indicating whether the inter-slot FH or the intra-slot FH is enabled is not configured, the UE 200 may operate according to IE of the current specification.

Opt3: IE of the current specification relating to FH may be followed. In Opt1/2, the IE may be "PUCCH-ConfigCommon" or for each number of repetition.

Variation 1: In repetitive transmission of PUCCH for Msg. 4 HARQ-ACK, the UE 200 may always assume the intra-slot FH or the inter-slot FH.

Variation 2: An inter-slot FH pattern may be configured/indicated. In this case, the UE 200 may perform FH for each of N consecutive slots (N is a natural number larger than or equal to 1). The value of N can be changed by configuration/indication.

### (3.2.4) Operation example 4

In operation example 4, a description will be given of a communication operation that transmits terminal capability information including the configuration information of repetitive transmission of PUCCH.

The configuration information of repetitive transmission may be interpreted as the configuration information relating to whether to support the repetitive transmission of Msg. 4 PUCCH, the supported number of repetitions, the repetitive transmission of Msg. 4 PUCCH based on slot/sub-slot, and/or, the repletion of Msg. 4 PUCCH in the intra-slot FH/the inter-slot FH. The UE 200 may transmit the terminal capability information (UE capability) including the configuration information to the NW.

Alt0: The UE 200 may report the UE capability via Msg. 3/Msg. A.

Alt1: The UE 200 may always report the UE capability via Msg. 3/Msg. A.

Alt2: The UE 200 may report the UE capability when receiving a request regarding the reporting capability of Msg. 4 PUCCH from the gNB.

Alt3: The UE 200 may report the UE capability together with a request of the repetitive transmission described in the operation example 2 when detecting the need for the repetitive transmission of PUCCH Msg. 4.

Variation: The UE 200 may report the UE capability via Msg. 3 only after initial access, even if the UE 200 cannot report the UE capability. In this case, the Msg. 4 PUCCH repetition is not applied to the UE 200 before the initial access. The repetition of Msg. 4 PUCCH may be applied to the UE 200 that is only in RRC_CONNECTED.

### (4)Operation and effect

According to the above embodiments, the following operation and effect are obtained.

The UE 200 according to the embodiment of the present disclosure includes: a radio signal transmission and reception unit 210 that transmits an uplink signal using PUCCH; and a control signal and reference signal processing unit 240 that performs repetitive transmission of PUCCH over a plurality of slots when a PUCCH resource is not configured.

Thus, the repetitive transmission of PUCCH is performed even when a PUCCH resource is not configured in the UE 200, and thereby improves attenuation of a signal transmitted between, for example, the NTN or the gNB 100 and the UE 200, and enhances a coverage area.

### (5) Other embodiments

Although the embodiment has been described above, it is obvious to those skilled in the art that the present invention is not limited to the description of the embodiment and that various modifications and improvements thereof are possible.

In the above description, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

In the present disclosure, the terms such as "precoding", "precoder", "weight (precoding weight)", "quasi-co-location (QCL)", "Transmission Configuration Indication state (TCI state)", "spatial relation", "spatial domain filter", "transmission power", "phase rotation", "antenna port", "antenna port group", "layer", "the number of layers", "rank", "resource", "resource set", "resource group", "beam", "beam width", "beam angle", "antenna", "antenna element", "panel", and so on can be used interchangeably.

The block diagrams (FIGs. 4 and 5) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but the functions are by no means limited to these. For example, a functional block (component) to implement a function of transmission may be referred to as a "transmitting section (transmitting unit)," a "transmitter". The method for implementing each component is not particularly limited as described above.

Furthermore, the above-described gNB 100 (the apparatus), UE 200 (the apparatus) and AMF may function as a computer that executes the processes of the radio communication method of the present disclosure. FIG. 10 is a diagram to show an example of a hardware structure of the gNB 100 and UE 200. As shown in FIG. 10, the apparatus may each be formed as a computer apparatus that includes a processor 1001, a memory 1002, a storage 1003, a communication apparatus 1004, an input apparatus 1005, an output apparatus 1006, a bus 1007, and so on.

Note that in the following description, the word such as an apparatus can be read as a circuit, a device, a section, a unit, and so on. The hardware structure of the apparatus may be configured to include one or more of apparatuses shown in the drawings, or may be configured not to include part of apparatuses.

Each function of the apparatus (see FIGs. 4 and 5) is implemented by one of hardware elements or the combination of the hardware elements in the computer apparatus.

Each function of the apparatus is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The above-described various processes may be performed by a single processor 1001, or may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and so on. The memory 1002 may be referred to as a "register," a "cache," a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of a compact disc (Compact Disc ROM (CD-ROM) and so on), a hard disk drive, a flexible disk, a magneto-optical disk (for example, a compact disc, a digital versatile disc, a Blu-ray (registered trademark) disk), a smart card, a flash memory device (for example, a card, a stick, and a key drive), a floppy (registered trademark) disk, a magnetic stripe, and so on. The storage 1003 may be referred to as "auxiliary storage apparatus." The above recording medium may be a database including at least one of the memory 1002 and the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that performs output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, pieces of apparatus, including the processor 1001, the memory 1002, and others, are connected by a bus 1007 for communicating information. The bus 1007 may be formed with a single bus, or may be formed with buses that vary between pieces of apparatus.

Also, the apparatus may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, RRC signaling, Medium Access Control (MAC) signaling), broadcast information (master information block (MIB), system information block (SIB)), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), New radio access (NX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

Specific operations which have been described in the present disclosure to be performed by the gNB 100 may, in some cases, be performed by an upper node thereof. In a network including one or a plurality of network nodes with the gNB 100, it is clear that various operations that are performed to communicate with the UE 200 can be performed by the gNB 100 and other network nodes (for example, Mobility Management Entities (MMEs), Serving-Gateways (S-GWs), and so on may be possible, but these are not limiting) other than the gNB 100, or combinations of these. According to the above, a case is described in which there is a single network node other than the gNB 100. However, a combination of multiple other network nodes may be considered (e.g., MME and S-GW).

The information or signals may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A determination may be realized by a value (0 or 1) represented by one bit, by a boolean value (true or false), or by comparison of numerical values (e.g., comparison with a predetermined value).

Each aspect/embodiment described in the present disclosure may be used independently, may be used in combination, or may be used by switching according to operations. Further, notification of predetermined information (e.g., notification of "X") is not limited to an explicit notification, and may be performed by an implicit notification (e.g., by not performing notification of the predetermined information).

Software should be broadly interpreted to mean, regardless of whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) and wireless technologies (infrared, microwave, etc.), at least one of these wired line technologies or wireless technologies is included within the definition of the transmission medium.

Information, a signal, or the like, described in the present disclosure may be represented by using any one of various different technologies. For example, data, an instruction, a command, information, a signal, a bit, a symbol, a chip, or the like, referred to throughout the above description, may be represented by a voltage, an electric current, electromagnetic waves, magnetic fields, a magnetic particle, optical fields, a photon, or a combination thereof.

It should be noted that a term described in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," and so on can be used interchangeably. The gNB 100 may be referred to as the terms such as a "macro cell," a "small cell," a "femto cell," a "pico cell," and so on.

A gNB 100 can accommodate one or a plurality of (for example, three) cells (which may be referred to as sectors). When a gNB 100 accommodates a plurality of cells, the entire coverage area of the gNB 100 can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a gNB 100 and a base station subsystem that provides communication services within this coverage.

In the present disclosure, the terms "mobile station (MS), " "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases by the skilled person in the art.

At least one of a gNB 100 and a mobile station may be referred to as a "transmitting apparatus," a "receiving apparatus," a "communication apparatus," and so on. Note that at least one of a gNB 100 and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a gNB 100 and a mobile station also includes an apparatus which does not necessarily move during communication operation. For example, at least one of a gNB 100 and a mobile station may be an Internet of Things (IoT) device such as a sensor.

Furthermore, the gNB 100 in the present disclosure may be interpreted as a mobile station (user terminal, hereinafter the same). For example, each aspect/embodiment of the present disclosure may be applied to the structure that replaces a communication between a gNB 100 and a mobile station with a communication between a plurality of mobile stations (for example, which may be referred to as "Device-to-Device (D2D)," "Vehicle-to-Everything (V2X)," and the like). In this case, the mobile station may have the functions of the gNB 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the mobile station in the present disclosure may be interpreted as a gNB 100. In this case, the gNB 100 may have the functions of the mobile station described above. A radio frame may be constituted of one or a plurality of frames in the time domain. Each of one or a plurality of frames may be referred to as a "subframe" in the time domain. Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of the number of symbols less than a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a gNB 100 performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe, " a "long subframe, " a "slot, " or the like. A TTI that is shorter than a normal TTI may be referred to as a "shortened TTI, " a "short TTI," a "partial or fractional TTI," a "shortened subframe," a "short subframe," a "mini-slot, " a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may be a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP (s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of one or more wires, cables, and printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot", depending on which standard is applied.

The phrase "based on" as used in the present disclosure does not mean "based only on", unless otherwise specified. In other words, the phrase "based on" means both "based only on" and "based at least on".

"Means" included in the configuration of each of the above apparatuses may be replaced by "parts", "circuits", "devices", etc.

Reference to elements with designations such as "first," "second," and so on used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present disclosure is not intended to be an "exclusive or".

In the present disclosure, in the case where an article is added by translation, for example "a", "an", and "the", the disclosure may include that the noun following these articles is plural.

As used in the present disclosure, the term "determining" may encompasses a wide variety of actions. For example, "determining" may be regarded as determining to have performed judging, calculating, computing, processing, deriving, investigating, looking up (looking up, search, inquiry) (e.g., looking up in a table, a database or another data structure), ascertaining and the like. Also, "determining" may be regarded as determining to have performed receiving (e.g., receiving information), transmitting (e.g., transmitting information), inputting, outputting, accessing (e.g., accessing data in a memory) and the like. Also, "determining" may be regarded as determining to have performed resolving, selecting, choosing, establishing, comparing and the like. That is, "determining" may be regarded as determining to have performed some action. Moreover, "determining" may be read as "assuming", "expecting", "considering", and the like.

In this disclosure, the term "A and B are different" may mean "A and B are different from each other." It should be noted that the term "A and B are different" may mean "A and B are different from C." Terms such as "separated" or "combined" may be interpreted in the same way as the "different".

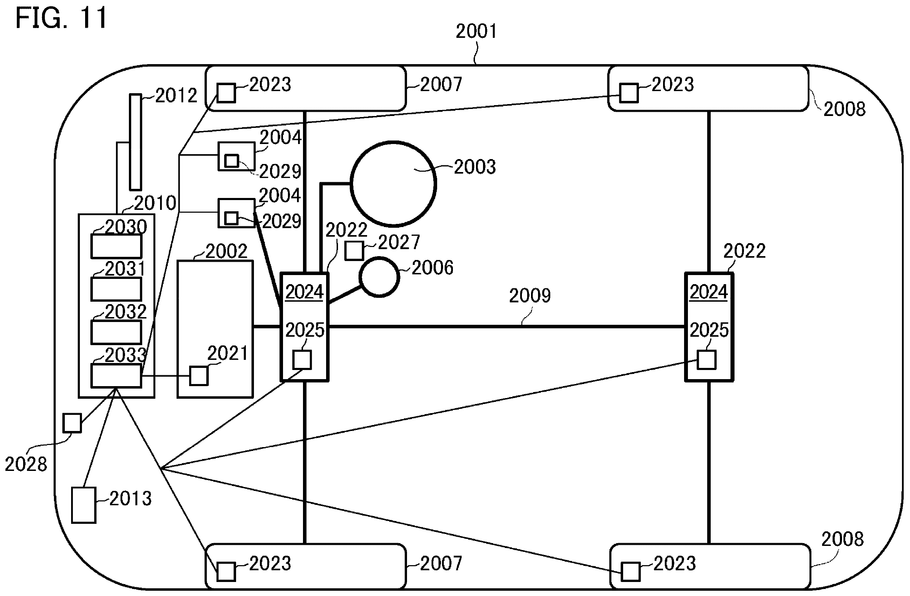

Fig. 11 shows an example of a configuration of a vehicle 2001. As shown in Fig. 11, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021-2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-29 provided in the vehicle. The electronic control unit 2010 may be referred to as an ECU (Electronic Control Unit) .

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a gNB 100, a mobile station, or the like.

The communication module 2013 transmits a current signal from a current sensor, which is input to the electronic control unit 2010, to external devices through radio communication. Also, the communication module 2013 transmits to external devices through radio communication, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like, which are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

### <Supplementary Note>

The terminal of the present embodiment may be configured as a terminal described in the following sections.

### (Section 1)

A terminal (UE 200) includes: a transmission unit (radio signal transmission and reception unit 210) that transmits an uplink signal (HARQ-ACK) using a physical uplink control channel (PUCCH); and a control unit (control signal and reference signal processing unit 240) that performs repetitive transmission of the physical uplink control channel over a plurality of slots using a common resource of the physical uplink control channel if an individual resource of the physical uplink control channel is not configured (PUCCH resource configuration).

### (Section 2)

The terminal (UE 200) according to claim 1, wherein the control unit (control signal and reference signal processing unit 240) performs the repetitive transmission based on a configuration (table) of a common resource of the physical uplink control channel including the number (repetition factor) of the repetitive transmission.

### (Section 3)

The terminal (UE 200) according to claim 1 or 2, wherein the control unit (control signal and reference signal processing unit 240) performs the repetitive transmission based on a specific condition relating to performing the repetitive transmission.

### (Section 4)

The terminal (UE 200) according to any one of claims 1 to 3, wherein the control unit (control signal and reference signal processing unit 240) performs the repetitive transmission by a second slot, based on a configuration of a common resource of the physical uplink control channel including information that enables the repetitive transmission by the second slot (sub-slot) having a shorter time domain than a first slot (slot).

### (Section 5)

The terminal (UE 200) according to any one of claims 1 to 4, wherein the control unit (control signal and reference signal processing unit 240) performs the repetitive transmission, based on a configuration of a common resource of the physical uplink control channel including information relating to repetitive transmission to which frequency hopping between the plurality of slots or in the slot (inter-slot FH, intra-slot FH) is applied.

### (Section 6)

The terminal (UE 200) according to any one of claims 1 to 5, wherein the transmission unit (radio signal transmission and reception unit 210) transmits terminal capability information (UE capability) including configuration information of the repetitive transmission.

As described above, the present disclosure has been described in detail. It is apparent to a person skilled in the art that the present disclosure is not limited to one or more embodiments described in the present disclosure. The present disclosure can be implemented as modifications and variations without departing from the subject matter and the scope of the present disclosure defined by the descriptions of claims. Therefore, the descriptions of the present disclosure are for illustrative purposes only, and are not intended to be any limitations to the present disclosure.

### Reference Signs List

10 radio communication system
20 NG-RAN
30 core network
40 radio communication node
100 gNB
100X NTN gateway
110 reception unit
120 transmission unit
130 control unit
150 artificial satellite
200 UE
210 radio signal transmission and reception unit
220 amplifier unit
230 modulation and demodulation unit
240 control signal and reference signal processing unit
250 encoding/decoding unit
260 data transmission and reception unit
270 control unit
1001 processor
1002 memory
1003 storage
1004 communication apparatus
1005 input apparatus
1006 output apparatus
1007 bus
2001 vehicle
2002 drive unit
2003 steering unit
2004 accelerator pedal
2005 brake pedal
2006 shift lever
2007 left and right front wheels
2008 left and right rear wheels
2009 axle
2010 electronic control unit
2012 information service unit
2013 communication module
2021 current sensor
2022 rotational speed sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port

## Claims

1. A terminal comprising:
a transmission unit that transmits an uplink signal using a physical uplink control channel; and
a control unit that performs repetitive transmission of the physical uplink control channel over a plurality of slots using a common resource of the physical uplink control channel if an individual resource of the physical uplink control channel is not configured.

2. The terminal according to claim 1, wherein
the control unit performs the repetitive transmission based on a configuration of a common resource of the physical uplink control channel including the number of the repetitive transmission.

3. The terminal according to claim 1,
wherein the control unit performs the repetitive transmission based on a specific condition relating to performing the repetitive transmission.

4. The terminal according to claim 1, wherein
the control unit performs the repetitive transmission by a second slot, based on a configuration of a common resource of the physical uplink control channel including information that enables the repetitive transmission by the second slot having a shorter time domain than a first slot.

5. The terminal according to claim 1, wherein
the control unit performs the repetitive transmission, based on a configuration of a common resource of the physical uplink control channel including information relating to repetitive transmission to which frequency hopping between the plurality of slots or in the slot is applied.

6. The terminal according to claim 1, wherein
the transmission unit transmits terminal capability information including configuration information of the repetitive transmission.
